# EUROPÄISCHE PATENTANMELDUNG

(11) **EP 4 729 232 A2**
(43) Veröffentlichungstag der Anmeldung: **22.04.2026**
(21) Anmeldenummer: 26162951.3
(22) Anmeldetag: 15.05.2024
(51) Int. Cl.: B23Q 3/157

(54) **BEARBEITUNGSZENTRUM ZUR MECHANISCHEN BEARBEITUNG VON WERKSTÜCKEN**

(62) Teilanmeldung aus: 24176000.8
(71) Anmelder: MG Beteiligungsgesellschaft mbH, 73312 Geislingen/Steige (DE)
(72) Erfinder: Grüner, Magnus, 73312 Geislingen/Steige (DE); Grüner, Tobias, 73312 Geislingen/Steige (DE)
(74) Vertreter: Patentanwälte Magenbauer & Kollegen Partnerschaft mbB

(57) **Zusammenfassung**

Bei einem Bearbeitungszentrum zur mechanischen Bearbeitung von Werkstücken mit wenigstens einer Bearbeitungseinheit (12), die einen in einer Z-Achsrichtung 15 eines durch drei senkrecht aufeinander stehende Achsrichtungen X, Y, Z gebildeten Koordinatensystems bewegbaren, mit einem Bearbeitungswerkzeug (21) zur Bearbeitung eines in einer Bearbeitungszone (22) angeordneten Werkstücks bestückbaren Werkzeugschlitten (23), eine in einer X-Achsrichtung (13) und in einer Y-Achsrichtung (14) bewegbare, mit einer Spannvorrichtung (24) zur Aufnahme und zum Festspannen des zu bearbeitenden Werkstücks bestückbare Werkstückpositioniereinheit (25) und ein Maschinengestell (16) aufweist, und mit wenigstens einem Werkzeugmagazin (29), das ein Magazingestell (30) aufweist, weist das Maschinengestell (16) einen Magazin-Bestückungsplatz (41) auf an dem das Werkzeugmagazin lösbar lagerbar oder gelagert ist und ferner eine zu dem Bearbeitungszentrum (11) gehörende Magazinwechselvorrichtung (42) vorgesehen ist, mittels der das Werkzeugmagazin (29) zwischen einer Bereitschaftsposition außerhalb des Magazin-Bestückungsplatzes (41) und einer Gebrauchsposition an dem Magazin-Bestückungsplatz (41) bewegbar ist.

## Beschreibung

Die Erfindung betrifft ein Bearbeitungszentrum zur mechanischen Bearbeitung von Werkstücken, mit wenigstens einer Bearbeitungseinheit, die einen in einer Z-Achsrichtung eines durch drei senkrecht aufeinander stehende Achsrichtungen X, Y, Z gebildeten Koordinatensystems bewegbaren, mit einem Bearbeitungswerkzeug zur Bearbeitung eines in einer Bearbeitungszone angeordneten Werkstücks bestückbaren Werkzeugschlitten, eine in einer X-Achsrichtung und in einer Y-Achsrichtung bewegbare, mit einer Spannvorrichtung zur Aufnahme und zum Festspannen des zu bearbeitenden Werkstücks bestückbare Werkstückpositioniereinheit und ein Maschinengestell aufweist, wobei der Werkzeugschlitten eine zu einer Rotationsbewegung antreibbare Antriebsspindel zur Bereitstellung von Antriebsenergie für das Bearbeitungswerkzeug aufweist, und wobei die Spannvorrichtung um wenigstens eine erste Rotationsachse rotierbar ist, und mit wenigstens einem Werkzeugmagazin, das ein Magazingestell aufweist, an dem eine Werkzeugfördervorrichtung angeordnet ist, wobei die Werkzeugfördervorrichtung ein mittels eines Magazinantriebs antreibbares Förderelement aufweist, an dem mehrere Werkzeughalterungen zur Halterung von Bearbeitungswerkzeugen angeordnet sind, wobei die Werkzeughalterungen mittels einer Förderbewegung des Förderelementes in eine Werkzeug-Wechselposition bewegbar sind, in der ein Werkzeugwechsler mit dem Werkzeugmagazin zum Werkzeugwechsel interagiert.

Ein Bearbeitungszentrum der eingangs erwähnten Art ist beispielsweise aus der EP 0 767 721 B1 bekannt. Das dort offenbarte Bearbeitungszentrum besitzt eine in Z-Achsrichtung bewegbare Arbeitseinheit, die mit einem Bearbeitungswerkzeug, beispielsweise in Form eines Bohrers bestückbar ist. Mit dem Bearbeitungswerkzeug lässt sich ein in einer Bearbeitungszone angeordnetes Werkstück bearbeiten, das mit Hilfe einer Positioniereinrichtung in der Bearbeitungszone relativ zum Bearbeitungswerkzeug positionierbar ist. Dabei wird das Werkstück mittels einer Spannvorrichtung gehalten. Die Positioniereinrichtung wiederum ist in X-Achsrichtung verfahrbar und weist zudem eine Y-Achse und eine Rotationsachse auf. Die Positionseinrichtung ist dazu eingerichtet, das angekoppelte Werkstück zwischen der Bearbeitungszone und einer außerhalb der Bearbeitungszone befindlichen Werkstück-Wechselstation zu verfahren, wo ein Werkstückwechsel zwischen zu bearbeitenden und bereits bearbeiteten Werkstücken, beispielsweise mit Hilfe eines Greifers stattfindet. Das Bearbeitungszentrum weist ferner einen Werkzeugspeicher auf, der eine Vielzahl von Bearbeitungswerkzeugen bereithält, mit denen der Werkzeugschlitten wahlweise bestückbar ist. Das Bestücken selbst erfolgt dann mit Hilfe eines geeigneten Werkzeugwechslers.

Die DD 216 667 A1 offenbart eine Vorrichtung zur Verschiebung kompletter Werkzeugmagazine an automatischen Werkzeugmaschinen. Es ist eine Vielzahl von Werkzeugmagazinen offenbart, die an einem Speichergestell aufgenommen und dort mittels Bändern umlaufend bewegbar sind. Die Werkzeugmagazine sind jeweils als Kettenmagazine ausgebildet, mit an einer Magazinkette angeordneten Werkstückträgern, an denen jeweils ein Werkzeug angeordnet ist. Die Werkzeugmagazine sind auswechselbar, wobei zum Auswechseln eine Magazinwechselvorrichtung mit einen Schieber verwendet wird, der die Werkzeugmagazine zwischen am Speichergestell und dem Ständer der Werkzeugmaschine ausgebildete Führungsbahnen hin- und herschieben kann.

Die US 2017/0266 772 A1 offenbart ein Bearbeitungszentrum, bei dem das Wechseln von Werkzeugmagazinen in Form von Kettenmagazinen durch einen Magazinwagen erfolgt.

Die EP 3 778 115 A1 offenbart ein Werkzeugmagazin das mittels eines Hubtisches eines AGV (Automatic Guided Vehicle) in Vertikalrichtung bewegbar ist.

Die EP 0 517 651 A1 offenbart eine Fabrikationsanlage, mit wenigstens einer Fertigungszelle, die eine Bearbeitungseinrichtung und ein dieser zugeordnetes Handhabungsgerät für den Werkzeug und/oder Werkstückwechsel aufweist, wobei in Reichweite des Handhabungsgeräts ein Magazin in Form eines Mehrebenen-Rundfahrspeichers mit einem Drehregal ausgebildet ist.

Aufgabe der Erfindung ist es, ein Bearbeitungszentrum der eingangs erwähnten Art zu schaffen, mit dem im Vergleich zu herkömmlichen Bearbeitungszentren eine größere Flexibilität beim Werkzeugwechsel bereitgestellt wird.

Diese Aufgabe wird durch ein Bearbeitungszentrum mit den Merkmalen des unabhängigen Anspruchs 1 gelöst. Weiterbildungen der Erfindung sind in den Unteransprüchen dargestellt.

Das erfindungsgemäße Bearbeitungszentrum zeichnet sich dadurch aus, dass das Maschinengestell wenigstens einen Magazin-Bestückungsplatz aufweist, an dem das zugeordnete Werkzeugmagazin lösbar lagerbar oder gelagert ist und ferner eine zu dem Bearbeitungszentrum gehörende Magazinwechselvorrichtung vorgesehen ist, mittels der das Werkzeugmagazin zwischen einer Bereitschaftsposition außerhalb des Magazin-Bestückungsplatzes und einer Gebrauchsposition an dem Magazin-Bestückungsplatz bewegbar ist, und wobei das am Magazin-Bestückungsplatz befindliche Werkzeugmagazin mittels eines Vertikalantriebs zwischen einer Einfahrposition und der mittels einer in der Y-Achsrichtung stattfindenden Absenkbewegung erreichbaren Gebrauchsposition bewegbar ist.

Bei herkömmlichen Bearbeitungszentren ist das Werkzeugmagazin in das Bearbeitungszentrum integriert, kann also nicht ausgetauscht werden. Da das Werkzeugmagazin nur eine begrenzte Zahl an Bearbeitungswerkzeugen aufnehmen kann, besteht der Bedarf für die Bearbeitung notwendige Bearbeitungswerkzeuge, die nicht im Werkzeugmagazin bevorratet sind, einzuwechseln, d. h. in das Werkzeugmagazin einzubringen. Bei Werkzeugmagazinen herkömmlicher Bearbeitungszentren wird dies dadurch gelöst, dass ein auszuwechselndes Bearbeitungswerkzeug von der zugeordneten Halterung des Werkzeugmagazins entfernt und durch ein einzuwechselndes Bearbeitungswerkzeug ersetzt wird. Dies ist zeitaufwendig, insbesondere bei mehreren einzuwechselnden Bearbeitungswerkzeugen.

Die Erfindung geht daher den Weg, das komplette Werkzeugmagazin gegen ein anderes auszutauschen, wobei beim einzuwechselnden Werkzeugmagazin die benötigten Bearbeitungswerkzeuge bereits vorgerüstet sind und daher zum Werkzeugwechsel lediglich die beiden Werkzeugmagazine gegeneinander ausgetauscht werden müssen. Dies ist insbesondere bei einem Produktwechsel, d.h. Wechsel auf einen anderen Typ von zu bearbeitenden Werkstücken von Relevanz, bei dem ganz andere Arten von Werkzeugen für die Bearbeitung zur Verfügung stehen müssen.

Bei einer Weiterbildung der Erfindung weist die Magazinwechselvorrichtung wenigstens einen Magazinwagen zur Aufnahme und zum Transport des Werkzeugmagazins auf. Damit lässt sich das einzuwechselnde Werkzeugmagazin relativ schnell an das Bearbeitungszentrum und dort in die Bereitschaftsposition bringen. Es können verschiedene Arten bzw. Typen von Magazinwägen eingesetzt werden. In einfachster Ausgestaltung ist es möglich einen mit Rollen versehenen Magazinwagen einzusetzen. Alternativ ist es denkbar, einen selbstfahrenden Magazinwagen einzusetzen oder ggf. einen ohne Rollen ausgestatteten Magazinwagen mittels eines fahrerlosen Transportfahrzeugs bzw. fahrerloses Transportsystems (FTS) zu bewegen.

Bei einer Weiterbildung der Erfindung weist das Magazingestell einen die Werkzeugfördervorrichtung umgebenden Grundrahmen auf, der mehrere Rahmenstreben aufweist, von denen an zwei Rahmenstreben jeweils Führungselemente, insbesondere Führungsrollen, angeordnet sind, die beim Magazinwechsel mit dem Maschinengestell interagieren. Die Führungselemente erleichtern die Bewegung des Werkzeugmagazins von der Bereitschaftsposition zum Magazin-Bestückungsplatz oder im Falle eines auszuwechselnden Werkzeugmagazins vom Magazin-Bestückungsplatz in die Bereitschaftsposition.

Unter Bereitschaftsposition ist diejenige Position zu verstehen, in der ein einzuwechselndes Werkzeugmagazin zum Einwechseln in einen unbestückten Magazin-Bestückungsplatz oder ein auszuwechselndes Werkzeugmagazin für den Abtransport mittels des Magazinwagens bereitsteht.

Zweckmäßigerweise ist der Grundrahmen viereckig, insbesondere rechteckig ausgebildet, mit zwei insbesondere parallel zueinander angeordneten stirnseitigen Rahmenstreben, die jeweils durch zwei insbesondere parallel zueinander angeordneten Längs-Rahmenstreben miteinander verbunden sind.

Bevorzugt sind die Führungselemente an den stirnseitigen Rahmenstreben angeordnet, insbesondere dort an der Unterseite der stirnseitigen Rahmenstreben.

Besonders bevorzugt erstrecken sich die stirnseitigen Rahmenstreben in der Gebrauchsposition des Werkzeugmagazins in X-Achsrichtung und die Längs-Rahmenstreben in Z-Achsrichtung.

Bei einer Weiterbildung der Erfindung weist der Magazin-Bestückungsplatz zwei, insbesondere einander gegenüberliegende, Führungsschienen auf, an denen die Führungselemente linear beweglich führbar sind und beim Magazinwechsel durch einen mittels eines Wechselantriebs der Magazinwechselvorrichtung erzeugten, insbesondere in X-Achsrichtung ausgerichteten Bewegungshub zwischen der Bereitschaftsposition und dem Magazin-Bestückungsplatz bewegbar sind.

In besonders bevorzugter Weise ist der Wechselantrieb als Linearantrieb, insbesondere fluidisch betätigbarer Hubzylinder, ausgebildet, wobei der Linearantrieb ein Antriebsglied, insbesondere Hubstange, aufweist, das mit einem Mitnehmerelement derart koppelbar ist, dass im gekoppelten Zustand der Bewegungshub auf das Werkzeugmagazin einleitbar ist, um dieses zwischen der Bereitschaftsposition und dem Magazin-Bestückungsplatz zu bewegen.

Besonders bevorzugt sind der Linearantrieb am Maschinengestell und das Mitnehmerelement am Werkzeugmagazin angeordnet. Prinzipiell wäre es jedoch auch denkbar, den Linearantrieb am Werkzeugmagazin und das Mitnehmerelement am Maschinengestell anzuordnen.

Bei einer Weiterbildung der Erfindung ist der Linearantrieb in Form des Hubzylinders um eine Schwenkachse schwenkbar, insbesondere am Maschinengestell gelagert, wobei zur Kopplung mit dem Mitnehmerelement ein Einschwenken der Hubstange in eine am Mitnehmerelement ausgebildete Aufnahme stattfindet.

Zweckmäßigerweise besteht im gekoppelten Zustand von Mitnehmerelement und Hubstange eine formschlüssige Verbindung. Zweckmäßigerweise ist das Mitnehmerelement als Klaue ausgebildet.

Erfindungsgemäß ist das am Magazin-Bestückungsplatz befindliche Werkzeugmagazin mittels eines Vertikalantriebs zwischen einer Einfahrposition und der mittels einer in der Y-Achsrichtung stattfindenden Absenkbewegung erreichbaren Gebrauchsposition bewegbar.

In besonders bevorzugter Weise weist der Vertikalantrieb mehrere Antriebseinheiten auf, von denen jeweils wenigstens einer mit einer der Führungsschienen des Maschinengestells derart gekoppelt ist, dass die Führungsschienen per Vertikalhub auf- oder abwärts bewegbar sind. Zweckmäßigerweise sind die Antriebseinheiten des Vertikalantriebs ebenfalls fluidisch betätigbare Hubzylinder. Es ist möglich, dass jeder Führungsschiene mehrere, insbesondere zwei Antriebseinheiten zugeordnet sind.

Bei einer Weiterbildung der Erfindung weisen die den Führungsschienen jeweils zugeordneten Rahmenstreben des Magazingestells jeweils wenigstens zwei sich in Y-Achsrichtung erstreckende Durchgangslöcher auf, die in der Gebrauchsposition des Werkzeugmagazins jeweils von einem am Maschinengestell angeordneten Zentrierdorn durchsetzt sind.

In besonders bevorzugter Weise sind Positionierhilfsmittel vorgesehen, mit denen eine Positionierung und Fixierung des Magazinwagens an dem Maschinengestell zur Einnahme der Bereitschaftsposition des Werkzeugmagazins ermöglicht ist.

Zweckmäßigerweise weisen die Positionierhilfsmittel Positionierbolzen und mit den Positionierbolzen zusammenwirkende Andockklammern mit jeweils einer Einfahröffnung für die Positionierbolzen auf. Zweckmäßigerweise sind die Andockklammern am Maschinengestell und die Positionierbolzen am Magazinwagen angeordnet. Prinzipiell wäre es jedoch auch denkbar, die Andockklammern am Magazinwagen und die Positionierbolzen am Maschinengestellt anzuordnen.

Zweckmäßigerweise sind zwei Andockklammern vorgesehen, von denen die erste Andockklammer eine sich in X-Achsrichtung erstreckende Einfahröffnung zur Positionierung in Bezug auf die X-Achsrichtung und die zweite Andockklammer eine sich in Z-Achsrichtung erstreckende Einfahröffnung zur Positionierung in Bezug auf die Z-Achsrichtung aufweisen.

Bei einer Weiterbildung der Erfindung ist das Förderelement als endlos umlaufendes Förderband, insbesondere Förderkette, ausgebildet, das mittels des Magazinantriebs in der Gebrauchsposition des Werkzeugmagazins in Z-Achsrichtung antreibbar ist.

Bei einer Weiterbildung der Erfindung weist das Werkzeugmagazin eine Auffangwanne auf, die mehrere Funktionen hat. Zum einen bildet sie die magazinseitige Auflagefläche am Magazin-Bestückungsplatz und zum anderen kann hier insbesondere bei auszuwechselnden Werkzeugmagazinen mit bereits in Benutzung gewesenen Bearbeitungswerkzeugen Kühlschmierstoff oder sonstige Rückstände gesammelt werden.

Bei einer Weiterbildung der Erfindung weist der Magazin-Bestückungsplatz wenigstens drei Auflageelemente auf, auf denen das Werkzeugmagazin in der Arbeitsposition aufliegt.

Zweckmäßigerweise sind Zentrierbolzen und Zentrierlöcher vorgesehen, über die das Werkzeugmagazin in der Gebrauchsposition am Magazin-Bestückungsplatz zentriert ist.

Zweckmäßigerweise sind die Zentrierbolzen und Zentrierlöcher Teil der Auflageelemente bzw. an der Unterseite der Auffangwanne und am Boden des Maschinengestells ausgebildet.

Besonders bevorzugt ist ein Positionsschalter vorgesehen, der eingerichtet ist, bei Erreichen der Einfahrposition die Absenkbewegung oder den Bewegungshub des Vertikalantriebs auszulösen.

Ein bevorzugtes Ausführungsbeispiel des erfindungsgemäßen Bearbeitungszentrums ist in der Zeichnung dargestellt und wird im Folgenden näher erläutert. In der Zeichnung zeigen:
- Figur 1: eine Seitenansicht auf ein bevorzugtes Ausführungsbeispiels des erfindungsgemäßen Bearbeitungszentrums,
- Figur 2: eine perspektivische Darstellung des Werkzeugmagazins des Bearbeitungszentrums aus Figur 1,
- Figur 3: eine Seitenansicht des Werkzeugmagazins aus Figur 2,
- Figur 4: eine vergrößerte Darstellung des Einzelheit X aus Figur 2,
- Figur 5: einen Schnitt durch das Werkzeugmagazin von Figur 2 entlang der Linie V-V,
- Figur 6: eine teilweise perspektivische Ansicht des Bearbeitungszentrums von Figur 1 unbestücktem Magazin-Bestückungsplatz,
- Figur 7: eine perspektivische Darstellung eines mit einem Werkzeugmagazin bestückten Magazinwagens und
- Figur 8: eine perspektivische Darstellung eines unbestückten Magazinwagens.

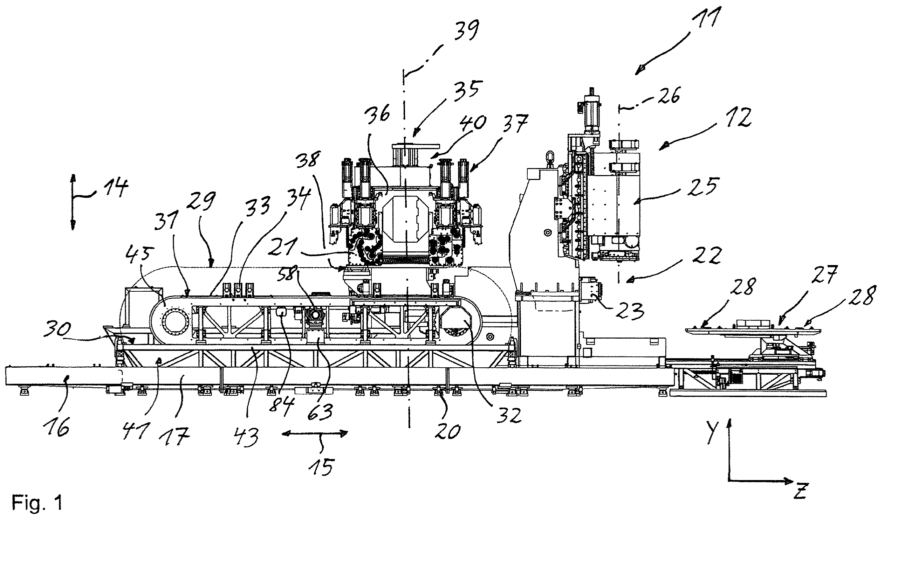

Die Figuren 1 bis 8 zeigen ein bevorzugtes Ausführungsbeispiel des erfindungsgemäßen Bearbeitungszentrums 11 zur mechanischen, insbesondere spanabhebenden Bearbeitung von Werkstücken (nicht dargestellt). Die Werkstücke können beispielsweise Getriebegehäuse, Kupplungsgehäuse, Elektromotorengehäuse oder Lenkgehäuse sein. Dies ist jedoch lediglich eine beispielhafte Aufzählung der verschiedenen Arten von Werkstücken. Es sind durchaus weitere, hier nicht genannte Arten von Werkstücken mit dem erfindungsgemäßen Bearbeitungszentrum 11 bearbeitbar.

Das Bearbeitungszentrum 11 weist eine Bearbeitungseinheit 12 oder in einer alternativen Ausführungsform zwei Bearbeitungseinheiten auf, wobei in diesem Fall die beiden Bearbeitungseinheiten in X-Achsrichtung 13 eines durch drei senkrecht aufeinander stehende Achsrichtungen X, Y, Z gebildeten Koordinatensystems benachbart zueinander angeordnet sind.

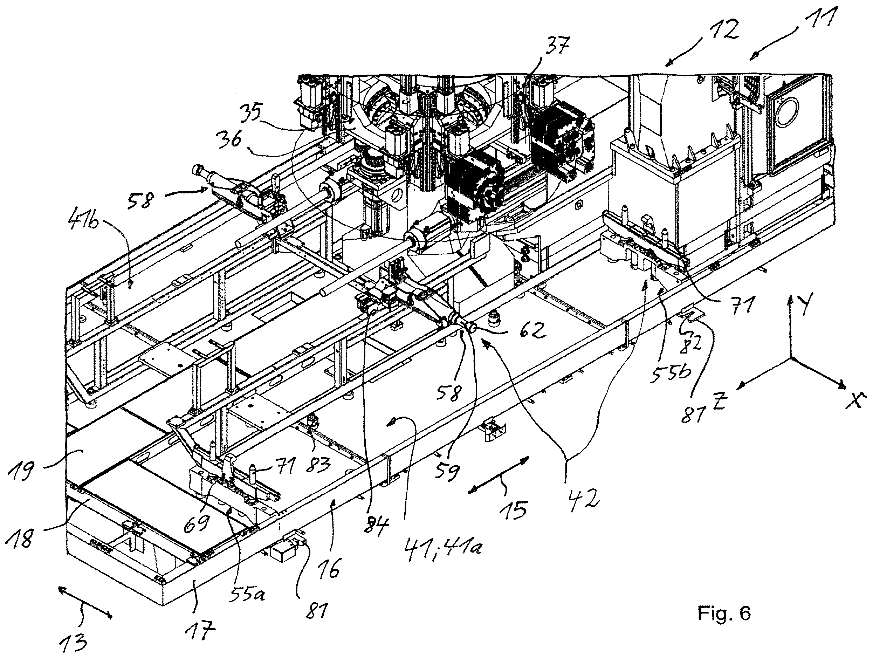

Wie insbesondere die Zusammenschau der Figuren 1 und 6 zeigt, weist das Bearbeitungszentrum 11 ein Grundgestell bzw. Maschinengestell 16 auf, mit einem den seitlichen äußeren Abschluss bildenden Grundrahmen 17, von dessen Innenwandung zahlreiche Grundstreben 18 zwischen zwei gegenüberliegenden Rahmenteilen des Grundrahmens 17 verlaufen. Die Grundstreben 18 erstrecken sich im Wesentlichen in einer durch die X-Achsrichtung 13 und Z-Achsrichtung 15 aufgespannten Ebene. An den Unterseiten der Grundstreben 18 und ggf. an den Unterseiten der äußeren Rahmenteile befinden sich Auflageelemente (nicht dargestellt), über die das gesamte Bearbeitungszentrum 11 auf dem Untergrund aufliegt. Gegebenenfalls können die Auflageelemente auch an einem Gestellboden 19 des Maschinengestells 16 angeordnet sein. Die Auflageelemente sind in Y-Achsrichtung 14 höhenverstellbar, wodurch eine exakt horizontale Ausrichtung des Bearbeitungszentrums 11 auch bei unebenem Untergrund möglich ist. Zur Höhenverstellung der Auflageelemente dienen von der Außenwand der Rahmenteile nach außen abstehende Betätigungselemente 20, wodurch eine Höhenverstellung in relativ einfacher Weise durch eine gute Zugänglichkeit der Betätigungselemente 20 durchführbar ist.

Wie insbesondere in Figur 1 gezeigt, sitzt die Bearbeitungseinheit 12 auf dem Maschinengestell 16. Die Bearbeitungseinheit 12 weist einen in Z-Achsrichtung 15 bewegbaren, mit einem Bearbeitungswerkzeug 21 zur Bearbeitung eines in einer Bearbeitungszone 22 angeordneten Werkstücks bestückbaren Werkzeugschlitten 23 und eine in einer X-Achsrichtung 13 und in der Y-Achsrichtung 14 bewegbare, mit einer Spannvorrichtung zur Aufnahme und zum Festspannen des zu bearbeitenden Werkstücks bestückbare Werkstückpositioniereinheit 25 auf.

Der Werkzeugschlitten 23 weist eine zu einer Rotationsbewegung antreibbare Antriebsspindel (nicht dargestellt) zur Bereitstellung von Antriebsenergie für das Bearbeitungswerkzeug 21 auf. Ferner ist die Spannvorrichtung 24 um wenigstens eine erste Rotationsachse 26 rotierbar.

Die Übernahme bzw. das Auswechseln von bearbeitenden Werkstücken von der Werkstückpositioniereinheit 25 bzw. Übergabe von Roh-Werkstücken an die Werkstückpositioniereinheit 25 erfolgt durch ein Wechselshuttle 27, das zweckmäßigerweise linear zwischen einer Bereitschaftsposition und einer in die Bearbeitungszone 22 eingefahrenen Wechselposition verfahrbar ist. Am Wechselshuttle 27 befinden sich insbesondere mehrere Bestückungsplätze 28 an denen Werkstückhalter (nicht dargestellt) zur Halterung der Roh-Werkstücke bzw. der bearbeiteten Werkstücke.

Das Bearbeitungszentrum 11 besitzt ferner wenigstens ein Werkzeugmagazin 29, das ein Magazingestell 30 aufweist, an dem eine Werkzeugfördervorrichtung 31 angeordnet ist, wobei die Werkzeugfördervorrichtung 31 ein mittels eines Magazinantriebs 32 antreibbares Förderelement 33 aufweist, an dem mehrere Werkzeughalterungen 34 zur Halterung von Bearbeitungswerkzeugen 21 angeordnet sind. Die Werkzeughalterungen 34 und die darauf gehaltenen Bearbeitungswerkzeuge 21 sind mittels einer Förderbewegung des Förderelements 33 in eine Werkzeug-Wechselposition bewegbar, in der ein Werkzeugwechsler 35 mit dem Werkzeugmagazin 29 zum Werkzeugwechsel interagiert.

Der insbesondere in den Figuren 1 und 6 gezeigte Werkzeugwechsler 35 besitzt einen Grundkörper 36, der im gezeigten Beispielsfall quaderförmig oder kubisch ausgestaltet ist. Der Grundkörper 36 besitzt eine Außenfläche, die im Beispielsfall des kubischen Grundkörpers 90° zueinanderstehende Flächenabschnitte sind.

Der Werkzeugwechsler 35 besitzt ferner wenigstens zwei Wechselarme 37, die dem Werkzeugmagazin 29 und dem Werkzeugschlitten 23 zugeordnet sind.

Zweckmäßigerweise ist der Werkzeugwechsler mittels einer Drehantriebsvorrichtung 38 um eine Wechsler-Drehachse 39 drehbar zwischen dem Werkzeugmagazin 29 und dem Werkzeugschlitten 23 gelagert.

Der in den Figuren 1 und 6 rein beispielhaft gezeigte Werkzeugwechsler 37 besitzt im gezeigten Beispielsfall mehrere Wechselarm-Paare 40, wobei ein Wechselarm-Paar dem Werkzeugmagazin 29 und gleichzeitig ein anderen Wechselarm-Paar 40 den Werkzeugschlitten 23 zugeordnet ist. Der gezeigte Werkzeugwechsler ist dazu eingerichtet, ein Werkzeugwechsel synchron an zwei Bearbeitungseinheiten durchzuführen. Anstelle des in den Figuren 1 und 6 gezeigten Werkzeugwechslers 37 mit mehreren Wechselarm-Paaren 40 könnte jedoch auch im Falle nur einer einzelnen Bearbeitungseinheit anstelle der Wechselarm-Paare nur lediglich ein Wechselarm dem Werkzeugmagazin 29 und gleichzeitig ein anderer Wechselarm 37 dem Werkzeugschlitten zugeordnet sein.

Die Wechselarme 37 sind zweckmäßigerweise jeweils linear in Y-Achsrichtung 14 bewegbar und können dann insbesondere synchron ein einzuwechselndes Bearbeitungswerkzeug 21 von zugeordneten Werkzeugmagazin 29 aufnehmen bzw. ein auszuwechselndes Bearbeitungswerkzeug 21 vom zugeordneten Werkzeugschlitten 23 aufnehmen, wobei die Wechselarme durch eine Aufwärtsbewegung in eine Transitposition gelangen, in der eine Drehbewegung des Werkzeugwechslers 35 um die Wechsler-Drehachse 39 stattfindet, wodurch das aufgenommene einzuwechselnde Bearbeitungswerkzeug in dem Bereich des zugeordneten Werkzeugschlittens und das aufgenommene auszuwechselnde Bearbeitungswerkzeug 21 zu einem zweiten Werkzeugmagazin gelangt. Durch anschließendes Absenken der Wechselarme 37 lässt sich das einzuwechselnde Bearbeitungswerkzeug an den Werkzeugschlitten 23 übergeben bzw. das auszuwechselnde Bearbeitungswerkzeug 21 an die zugeordnete Halterung im Werkzeugmagazin übergeben.

Das einzuwechselnde bzw. zur Bearbeitung bereitstehende Bearbeitungswerkzeug 21 fährt dann mittels des Werkzeugschlittens 23 in Z-Achsrichtung 15 in die Bearbeitungszone 22, wo bereits ein zu bearbeitendes Werkstück an der Werkstückpositioniereinheit 25 bereitsteht, so dass eine Bearbeitung des Werkstücks stattfinden kann. Dabei kann der Werkzeugschlitten 23 in Z-Achsrichtung 13 verfahren, während die Werkstückpositioniereinheit 25 in X-Achsrichtung 13 und in Y-Achsrichtung 14 verfahren kann und wobei die Spannvorrichtung um wenigstens eine Rotationsachse 26 rotiert werden kann. Bei einer nicht gezeigten Fünf-Achs-Bearbeitung besitzt die Spannvorrichtung eine weitere Rotationsachse (nicht dargestellt), so dass sie insgesamt um zwei Rotationsachsen rotierbar ist, von denen sich eine in Y-Achsrichtung 14 und die andere in Z-Achsrichtung 15 erstrecken.

Ein wichtiger Aspekt des erfindungsgemäßen Bearbeitungszentrums 11 ist, dass das Maschinengestell 16 wenigstens einen Magazin-Bestückungsplatz 41 aufweist, an dem das zugeordnete Werkzeugmagazin 29 lösbar lagerbar oder gelagert ist, wobei ferner eine zum Bearbeitungszentrum 11 gehörende Magazin-Wechselvorrichtung 42 vorgesehen ist, mittels der das Werkzeugmagazin 29 zwischen einer Bereitschaftsposition außerhalb des Magazin-Bestückungsplatzes 41 und einer Gebrauchsposition 43 an dem Magazin-Bestückungsplatz 41 bewegbar ist.

Wie insbesondere in Figur 6 gezeigt, sind zweckmäßigerweise zwei Magazin-Bestückungsplätze 41a, 41b vorgesehen, denen jeweils ein Werkzeugmagazin 29 zugeordnet ist.

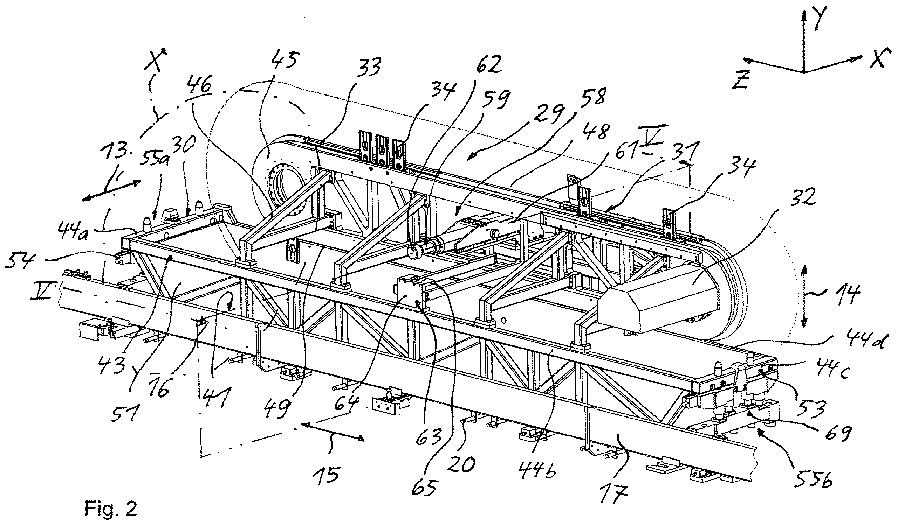

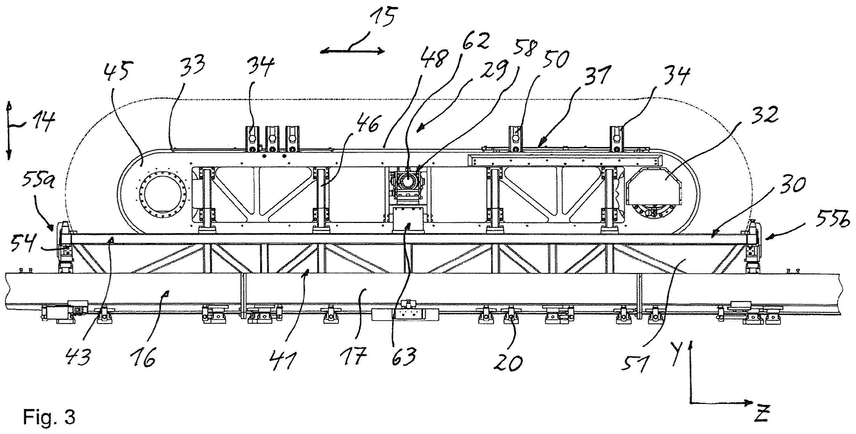

Wie insbesondere in den Figuren 2 und 3 gezeigt, besitzt das Magazingestell 30 einen die Werkzeugfördervorrichtung 31 umgebenden Grundrahmen 43, der mehrere Rahmenstreben 44a-d aufweist.

Die Rahmenstreben 44a-d definieren eine durch die X-Achsrichtung und Z-Richtung aufgespannte Ebene. Im gezeigten Beispielsfall ist der Grundrahmen 43 rechteckförmig ausgestaltet und besitzt zwei parallel zueinander angeordnete stirnseitige Rahmenstreben 44a, c, die jeweils durch zwei parallel zueinander angeordnete Längs-Rahmenstreben 44c, 44d miteinander verbunden sind. Es ist hier eine vorderen Längs-Rahmenstrebe 44b und eine hintere, in der Gebrauchsposition des Werkzeugmagazins 29 dem Werkzeugwechsler 35 zugewandte hintere Längs-Rahmenstrebe 44d vorgesehen. Die stirnseitigen Rahmenstreben 44a, 44c erstrecken sich in der Gebrauchsposition in X-Achsrichtung 13, während sich die Längs-Rahmenstreben 44b, 44d in Z-Achsrichtung 15 erstrecken. Die Werkzeugfördervorrichtung 31 ist an dem Grundrahmen 43 angeordnet, wie es beispielhaft in Figur 2 gezeigt ist. Wie bereits erwähnt, besitzt die Werkzeugfördervorrichtung 31 ein Förderelement 33, das beispielhaft in Form einer Förderkette ausgebildet ist. Das Förderelement 33, insbesondere die Förderkette ist endlos umlaufend an einem Führungskörper 45 gelagert. Der Führungskörper 45 ist im gezeigten Beispielsfall schwertartig ausgestaltet und erstreckt sich in der durch die Z-Achsrichtung und die Y-Achsrichtung aufgespannten Y, Z-Ebene.

Zweckmäßigerweise sitzt der Führungskörper 45 an der hinteren Rahmenstrebe 44d. Damit ein Verkippen des Werkzeugmagazins 29 verhindert wird, ist der schwertartige Führungskörper 45 durch mehrere balkenartige Stützstreben 46 abgestützt. Die Stützstreben 46 sind jeweils einerseits am Führungskörper 45 befestigt und andererseits erstrecken sie sich in X-Achsrichtung 13 bzw. bei schrägen Stützstreben 46 in X-Achsrichtung und Y-Achsrichtung in Richtung zur vorderen Rahmenstrebe 44b, wo sie dann mit dieser verbunden sind. Der Führungskörper 45 der Werkzeugfördervorrichtung 31 besitzt zwei Umlenkungen 47a, 47b, die das Förderelement in ein Obertrum 48 und einen Untertrum 49 unterteilen, wobei das Obertrum 48 in Richtung zur Bearbeitungszone 22 und das Untertrum 49 von der Bearbeitungszone 22 wegbewegt wird. Der Magazinantrieb 32 sitzt an einer der Umlenkungen 47a, 47b. Zweckmäßigerweise ist eine der Umlenkungen 47a als Antriebsrad ausgebildet, an dem der Magazinantrieb 32 sitzt. Zweckmäßigerweise wird die andere Umlenkung 47b durch eine Bahnkurve gebildet, die an dem schwertartigen Führungskörper 45 der Werkzeugfördereinrichtung 116 ausgebildet, insbesondere dort eingefräst ist.

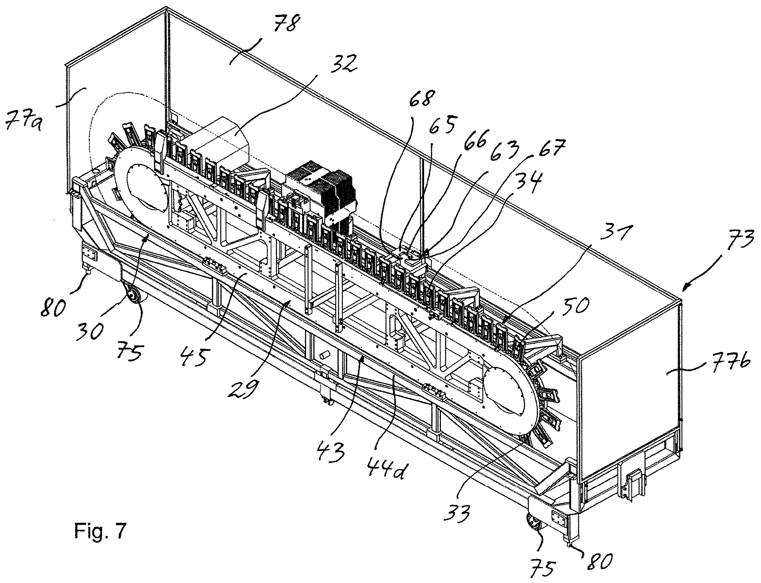

Wie bereits erwähnt sind am Förderelement 33, insbesondere an der Förderkette, mehrere Werkzeughalterungen 34 befestigt und werden mit der Bewegung des Förderelements 33 mitbewegt. Zweckmäßigerweise sind die Werkzeughalterungen 34 in regelmäßigen Abständen zueinander benachbart positioniert, wobei in den Figuren 2 und 3 lediglich ein paar der Werkzeughalterungen 34 gezeigt sind, in der Praxis jedoch wie insbesondere in Figur 7 gezeigt, die Förderkette voll mit Werkzeughalterungen besetzt ist. Die Werkzeughalterungen 34 besitzen jeweils eine Halterungs-Schnittstelle 50, die mit einer Werkzeug-Schnittstelle (nicht dargestellt) am Bearbeitungswerkzeug kompatibel ist. Wichtig ist hierbei zu bemerken, dass die Halterungs-Schnittstellen 50 der Werkzeughalterungen 34 alle identisch zueinander ausgestaltet sind und auch die dazugehörigen Werkzeug-Schnittstellen ebenfalls identisch zueinander ausgebildet sind. Das heißt, egal welches Bearbeitungswerkzeug und in welcher Geometrie an den Halterungen gelagert werden soll und egal welche Werkzeughalterung 34 verwendet werden soll, Werkzeughalterung 34 und Bearbeitungswerkzeug 21 passen stets zusammen. Zweckmäßigerweise wird unabhängig von der Baugröße des Bearbeitungswerkzeugs 21 immer nur eine Werkzeughalterung 34 benötigt, wobei bei relativ breiten Bearbeitungswerkzeugen 21 dann die links und rechts der benutzten Werkzeughalterung 34 angeordneten benachbarten Werkzeughalterungen wegen der Baugröße des Bearbeitungswerkzeugs für eine Halterungsaufgabe nicht mehr zur Verfügung stehen.

Wie insbesondere in Figur 2 gezeigt, besitzt das Werkzeugmagazin eine Auffangwanne 51, die als Multifunktions-Bauteil ausgestaltet ist. Die Auffangwanne 51 sitzt unterhalb des Grundrahmens 43, das heißt der Grundrahmen 43 bildet den oberen Abschluss der Auffangwanne 51. Die Auffangwanne 51 dient zum einen zur Aufnahme von Kühlschmierstoffen und sonstigen Schmutzrückständen, die insbesondere von den Bearbeitungswerkzeugen 21 her stammen, insbesondere wenn diese ausgewechselt wurden. Zum anderen besitzt die Auffangwanne 51 einen Wannenboden 52 an dessen Unterseite nachfolgend noch näher beschriebene Zentrierelemente angeordnet sind.

Ein wichtiger Aspekt ist, wie bereits vorstehend erwähnt, dass das Werkzeugmagazin 29 ausgetauscht und durch ein anderes Werkzeugmagazin ersetzt werden kann. Dadurch lassen sich die Rüstzeiten, insbesondere die durch das Auswechseln von Bearbeitungswerkzeugen entstehen, reduzieren. Bei herkömmlichen Bearbeitungszentren 11 mit fest eingebauten Werkzeugmagazinen, die nicht auswechselbar sind, besteht der Bedarf, dass die Bearbeitungswerkzeuge 21 einzeln ausgetauscht werden müssen, falls sie für die nachfolgenden Bearbeitungsvorgänge nicht mehr zur Verfügung stehen sollen. Das heißt, das auszutauschende Bearbeitungswerkzeug muss dann von der zugehörigen Werkzeughalterung gelöst, von der Werkzeughalterung 34 entfernt und durch ein einzuwechselndes Bearbeitungswerkzeug 21 ersetzt werden. Dies ist vor allem beim Austausch von mehreren Bearbeitungswerkzeugen 21 sehr zeitaufwendig. Dieser Zeitaufwand lässt sich deutlich reduzieren, falls nicht einzelne Bearbeitungswerkzeuge 21 ausgetauscht werden, sondern das komplette Werkzeugmagazin 29. Dies ist insbesondere bei einem Produktwechsel, d.h. Wechsel auf einen anderen Typ von zu bearbeitenden Werkstücken von Relevanz, bei dem ganz andere Arten von Werkzeugen für die Bearbeitung zur Verfügung stehen müssen. Der Austausch der Werkzeugmagazine 29 erfolgt mit der bereits erwähnten Magazin-Wechselvorrichtung 42.

Zur Magazin-Wechselvorrichtung 42 gehören mehrere Komponenten, die einerseits am Magazin-Bestückungsplatz 41 des Maschinengestells 16 und andererseits am Werkzeugmagazin 29 angeordnet sind.

Magazinseitig sind hier Führungselemente 53 zu nennen, die zweckmäßigerweise als Führungsrollen ausgebildet sind und an der Unterseite der stirnseitigen Rahmenstreben 44a, 44c angeordnet sind. Diese Führungselemente 53 wirken mit maschinenseitigen Führungsschienen 54 zusammen, die Bestandteile von zwei einander gegenüberliegenden Zentriermodulen 55a, 55b sind.

Wie insbesondere in Figur 6 gezeigt, erstrecken sich die Zentriermodule 55a, 55b in X-Achsrichtung 13 und definieren dabei die stirnseitigen Enden des Magazin-Bestückungsplatzes 41. Die Zentriermodule 55a, 55b besitzen jeweils einen Grundträger 57, der am Boden des Maschinengestells 16 befestigt ist. An den Grundträgern 57 sind jeweils in nachfolgend noch näher beschriebener Weise die Führungsschienen 54 gelagert.

Im gezeigten Beispielsfall wird ein einzuwechselndes Werkzeugmagazin 29 aus der Bereitschaftsposition in Richtung Magazin-Bestückungsplatz 51 bewegt und zwar mit Hilfe eines Wechselantriebs 58. Zweckmäßigerweise ist der Wechselantrieb 58 als Linearantrieb ausgebildet, wobei sich beispielsweise ein fluidisch betätigbarer Hubzylinder eignet. Es können natürlich auch andere Arten von Linearantrieben eingesetzt werden.

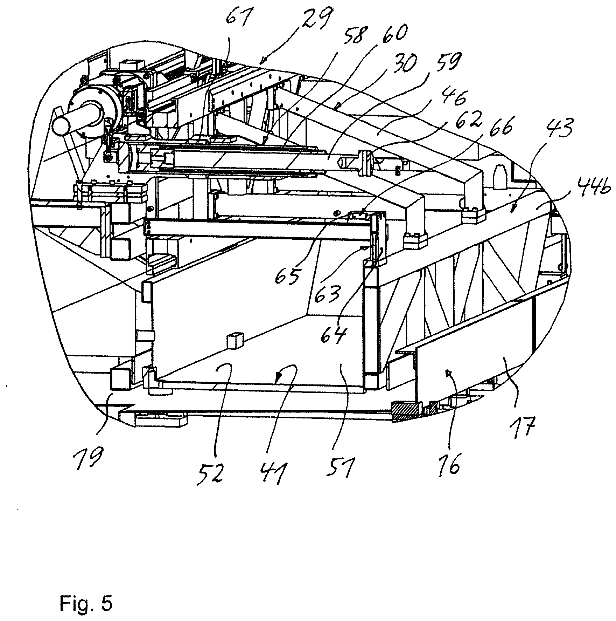

Wie beispielhaft in Figur 5 und auch in Figur 2 gezeigt, besitzt der Hubzylinder ein Antriebsglied in Form einer Hubstange 59. Gegebenenfalls kann die Hubstange auch mehrteilig als Teleskopstange ausgebildet sein, jedoch ist auch eine einteilige Hubstange einsetzbar. Die Hubstange 59 ist in einem Zylindergehäuse 60 linear verfahrbar gelagert. Obgleich nicht explizit dargestellt, lässt sich die Ausgestaltung des Hubzylinders derart beschreiben, dass ein im Zylindergehäuse beweglich geführter Hubkolben das Zylindergehäuse in zwei Arbeitskammern unterteilt, die jeweils abwechselnd mit Fluiddruck, insbesondere Hydraulikmedium, beispielsweise Hydrauliköl beaufschlagbar sind, wodurch der Hubkolben und die an den Hubkolben angekoppelte Hubstange je nach Beaufschlagung der einen oder der anderen Arbeitskammer ein- oder ausfährt.

Der Linearantrieb in Form des Hubzylinders ist um eine Schwenkachse (nicht dargestellt) schwenkbar gelagert. Im gezeigten Beispielsfall ist der Hubzylinder am Maschinengestell 16 angeordnet, das heißt, im gezeigten Beispielsfall ist der Hubzylinder um die Schwenkachse schwenkbar am Maschinengestell 16 gelagert.

Wie beispielhaft in Figur 2 gezeigt, besitzt der Hubzylinder hierzu ein Gehäuseträger 61, an dem das Zylindergehäuse 60 angeordnet ist, wobei der Gehäuseträger 61 um die in Z-Achsrichtung 15 verlaufende Schwenkachse schwenkbar gelagert ist.

Die mittels des Hubzylinders erzeugte Hubbewegung verläuft in X-Achsrichtung 13.

Wie insbesondere in den Figuren 2 und 5 gezeigt, besitzt die Hubstange 59 endseitig einen Stangenkopf 62, der gegenüber dem Rest der Hubstange einen größeren Durchmesser besitzt.

Der Wechselantrieb 58, also insbesondere der Hubzylinder interagiert mit einem Mitnehmerelement 63, das im gezeigten Beispielsfall am Werkzeugmagazin 29 angeordnet ist.

Das Mitnehmerelement 63, das auch als Klaue bezeichnet werden kann, kann, wie beispielhaft in den Figuren 2 und 5 gezeigt, an der vorderen Längs-Rahmenstrebe 44b angeordnet beziehungsweise dort befestigt sein. Das Mitnehmerelement 63 besitzt einen Basisabschnitt 64, der an der vorderen Längs-Rahmenstrebe 44b befestigt ist und sich im Wesentlichen in Y-Achsrichtung erstreckt. Winklig zum Basisabschnitt 64, insbesondere senkrecht hierzu ausgerichtet, also in X-Achsrichtung 13 vom Basisabschnitt 64 sich in Richtung hintere Rahmenstrebe 44d erstreckend, ist ein Mitnehmerabschnitt 65 mit dem Basisabschnitt 65 verbunden, wobei im Mitnehmerabschnitt 65 eine Aufnahme 66 in Form einer Durchbrechung ausgebildet ist, deren Form an den Stangenkopf 62 angepasst ist, die Aufnahme 66 besitzt einen Aufnahmeabschnitt 67 für den Stangenkopf 62 und einen demgegenüber mit kleinerem Querschnitt ausgebildeten Halsabschnitt 68, über den sich der Aufnahmeabschnitt 67 in Richtung zur hinteren Längs-Rahmenstrebe 44d hin öffnet und der für den durchmesserkleineren Abschnitt der Hubstange 59 gedacht ist.

Ist der Stangenkopf 62 im Aufnahmeabschnitt 67 des Mitnehmerelements 63 angeordnet, so findet bei einer anschließenden Einfahren der Hubstange in X-Achsrichtung eine formschlüssige Mitnahme am Mitnehmerelement 63 und somit eine Bewegung des kompletten Werkzeugmagazins 29 in X-Achsrichtung 13 statt.

Im gezeigten Beispielsfall ist das am Magazin-Bestückungsplatzes 41 befindliche Werkzeugmagazin 29 mittels eines Vertikalantriebs 69 zwischen einer Einfahrposition und der mittels einer in der Y-Achsrichtung 14 stattfindenden Absenkbewegung erreichbaren Gebrauchsposition bewegbar. Zweckmäßigerweise besitzt der Vertikalantrieb 69 mehrere Antriebseinheiten 70, die jeweils maschinenseitig den Grundträgern 57 zugeordnet sind.

Die Antriebseinheiten 70 sind zweckmäßigerweise ebenfalls als Linearantriebe, insbesondere in Form von fluidbetätigten Hubzylindern ausgebildet.

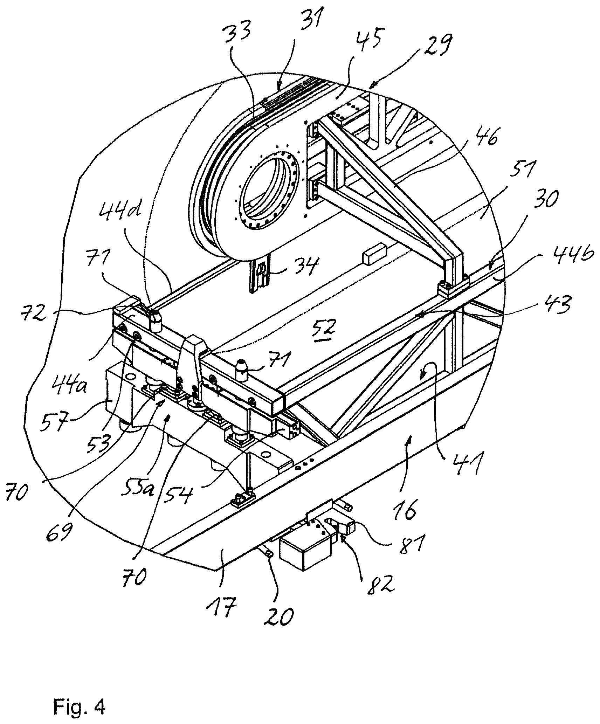

Wie insbesondere in Figur 4 gezeigt, sind jedem Zentriermodul 55a, 55b zwei Antriebseinheiten 70 zugeordnet. Die Antriebseinheiten 70 sitzen jeweils an den Grundträgern 57, wobei die aus den Antriebseinheiten 70 ausfahrbaren Hubstangen endseitig jeweils mit der zugeordneten Führungsschiene 54 gekoppelt sind. Das heißt durch die Aktivierung der Antriebseinheiten 70 lassen sich die Führungsschienen in Y-Achsrichtung auf- und abwärts bewegen. Zur Führung bei der Absenkbewegung und zur Zentrierung des Werkzeugmagazins in der Gebrauchsposition dienen am Grundkörper angeordnete Zentrierdorne 71. Zweckmäßigerweise sind je Grundträger zwei Zentrierdorne 71 vorgesehen, die zweckmäßigerweise links und rechts der beiden Antriebseinheiten 70 angeordnet sind. Den Zentrierdornen 71 zugeordnet sind an den stirnseitigen Rahmenstreben 44a, 44c ausgebildete Durchgangslöcher 72, die bei der Absenkbewegung von den Zentrierdornen 71 durchsetzt werden.

Die Magazin-Wechselvorrichtung 42 besitzt wenigstens einen Magazinwagen 73 zur Aufnahme und zum Transport des Werkzeugmagazins 29, also zum Transport des einzuwechselnden Werkzeugmagazins oder des ausgewechselten Werkzeugmagazins.

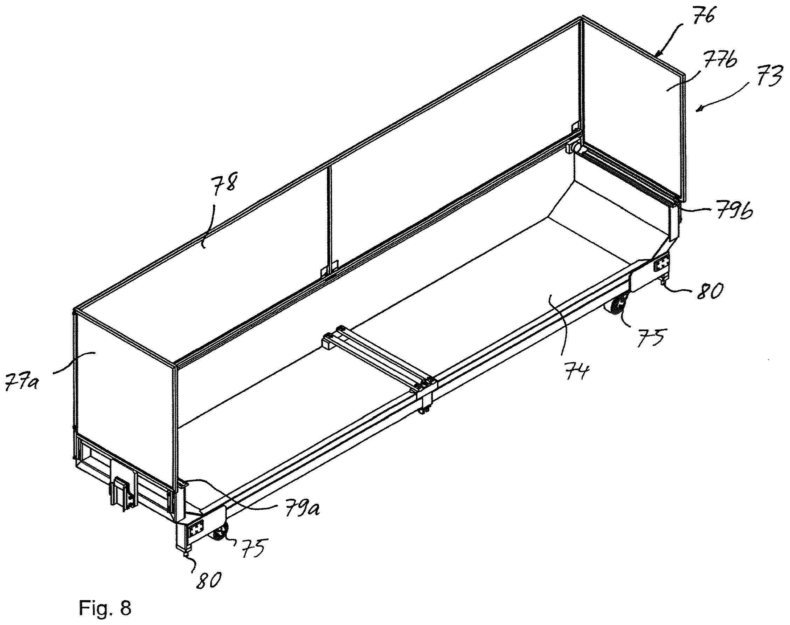

Ein derartiger Magazinwagen 73 ist beispielhaft in den Figuren 7 und 8 gezeigt. Der Magazinwagen 73 besitzt einen Wagenboden 74, an dessen Unterseite Führungsrollen 75 angeordnet sind.

Vom Wagenboden 74 aus erstreckt sich in Y-Achsrichtung 14 ein Wagengehäuse 76, das an einer Längsseite offen ist. Das heißt, das Wagengehäuse 76 besitzt zwei einander gegenüberliegende Stirnwände 77a, 77b und eine an einer Seite die beiden Stirnwände 77a, 77b miteinander verbindende Längswand 78, während die andere Längswand nicht vorhanden ist. An der Innenwand der Stirnwände 77a, 77b erstrecken sich, jeweils parallel zu den Stirnwänden 77a, 77b ausgerichtet zwei Wagen-Führungsschienen 79a, 79b auf denen die an den stirnseitigen Rahmenstreben 44a, 44c ausgebildeten Führungselemente, insbesondere Führungsrollen aufliegen. Am Wagenboden 74 befinden sich ferner zwei vom Wagenboden 74 aus nach unten in Y-Achsrichtung abstehende Positionierbolzen 80. Die Positionierbolzen 80 sind Bestandteile von Positionierhilfsmitteln, mit denen eine Positionierung und Fixierung des Magazinwagens 73 an dem Maschinengestell 16 zur Einnahme der Bereitschaftsposition des Werkzeugmagazins 29 ermöglicht ist.

Weitere Bestandteile der Positionierhilfsmittel sind Andockklammern 81, von denen, wie insbesondere in Figur 6 gezeigt, zwei am Grundrahmen 17 des Maschinengestells 16 befestigt sind. Die Andockklammern 81 besitzen jeweils eine Einfahröffnung 82 für die Positionierbolzen 80 am Magazinwagen 73. Die Ausrichtung der Einfahröffnungen 82 der Andockklammern ist unterschiedlich. Bei einer Andockklammer 81 öffnet sich die Einfahröffnung in X-Achsrichtung, während sich bei der anderen Andockklammer die Einfahröffnung in Z-Achsrichtung 15 öffnet. Sind die Positionierbolzen 80 in die Einfahröffnungen 82 eingefahren, so können diese verriegelt werden, beispielsweise mittels die Einfahröffnung verriegelnden Verriegelungsbolzen (nicht dargestellt).

Wie insbesondere in Figur 6 gezeigt, weist der Magazin-Bestückungsplatz 41 wenigstens drei, insbesondere vier, Auflageelemente 83 auf, auf denen das Werkzeugmagazin, insbesondere der Wannenboden 52 der Auffangwanne 51 des Werkzeugmagazins 29 aufliegt. Zweckmäßigerweise sind Zentrierbolzen und Zentrierlöcher vorgesehen, mit denen eine Zentrierung des Werkzeugmagazins in dessen Gebrauchsposition stattfindet, wobei die Zentrierbolzen und Zentrierlöcher Teil der Auflageelemente sein können beziehungsweise an der Unterseite der Auffangwanne, das heißt an der Unterseite des Wannenbodens 52 ausgebildet sein können.

Wie insbesondere in Figur 6 gezeigt, ist ein Positionsschalter 84 vorgesehen, der eingerichtet ist, bei Erreichen der Einfahrposition die Absenkbewegung auszulösen. Der Positionsschalter 84 kann beispielsweise als Sensor, insbesondere Näherungssensor ausgebildet sein. Das Einwechseln eines neuen Werkzeugmagazins 29 auf einen unbestückten Magazin-Bestückungsplatz 51 läuft folgendermaßen ab:
Das einzuwechselnde Werkzeugmagazin wird auf dem Magazinwagen 73 antransportiert, wobei zunächst der eine Positionierbolzen 80 in Z-Achsrichtung in die in Z-Achsrichtung 15 ausgerichtete Einfahröffnung einfährt und dann verriegelt wird und anschließend dann durch Einschwenken der andere Positionierbolzen 80 in die zugeordnete Einfahröffnung 82 eingeschwenkt wird und dann ebenfalls verriegelt wird. Dadurch ist die Bereitschaftsposition des Werkzeugmagazins 29 erreicht. Anschließend wird der Wechselantrieb aktiviert, wobei gegebenenfalls die Aktivierung des Wechselantriebs 58 ebenfalls über einen Positionsschalter, der beispielsweise den Andockklammern zugeordnet ist, getriggert werden kann.

Die Hubstange des als Hubzylinder ausgebildeten Wechselantriebs 59 ist nach oben geschwenkt und ausgefahren. Anschließend wird der Hubzylinder nach unten geschwenkt, wobei der Stangenkopf 62 in die Aufnahme 66 des Mitnehmerabschnitts 65 des Mitnehmerelements 63 beziehungsweise der Klaue einschwenkt. Anschließend wird der Hubzylinder aktiviert und die Hubstange eingefahren, wobei durch eine formschlüssige Mitnahme des Stangekopfs mit dem entsprechenden Abschnitts des Mitnehmerelements 63 ein Einziehen des Werkzeugmagazins 29 in die Einfahrposition am Magazin-Bestückungsplatz 41 stattfindet. Dabei gleiten die Führungselemente 53 an der Unterseite der stirnseitigen Rahmenstreben 44a, 44c an den Führungsschienen 54 entlang beziehungsweise die Führungsrollen-Rollen rollen auf einer Führungsbahn an der Oberseite der Führungsschiene ab.

Das vollständige Einfahren des Werkzeugmagazins wird durch den Positionsschalter 84 überwacht, der anschließend den Absenkantrieb beziehungsweise Vertikalantrieb 69 aktiviert. Dabei werden die Hubstangen der Antriebseinheiten 70 des Vertikalantriebs 69 eingefahren, so dass die angekoppelten Führungsschienen nach unten bewegt werden.

Gleichzeitig durchsetzen die Zentrierdorne 71 die Durchgangslöcher 72 an den stirnseitigen Rahmenstreben 44a, 44c. Nach vollständigem Absenken des Werkzeugmagazins ist die Gebrauchsposition des Werkzeugmagazins erreicht, so dass der Maschinenantrieb aktiviert werden kann, wodurch mit Bearbeitungswerkzeugen bestückte Werkzeughalterungen 34 in die Werkzeugwechselpositionen bewegt werden können, wo dann durch entsprechende Handhabung der Wechselarme eine Übernahme und Einwechseln auf den vorgesehenen Werkzeugschlitten stattfinden kann.

## Patentansprüche

1. Bearbeitungszentrum zur mechanischen Bearbeitung von Werkstücken, mit wenigstens einer Bearbeitungseinheit (12), die einen in einer Z-Achsrichtung (15) eines durch drei senkrecht aufeinander stehende Achsrichtungen X, Y, Z gebildeten Koordinatensystems bewegbaren, mit einem Bearbeitungswerkzeug (21) zur Bearbeitung eines in einer Bearbeitungszone (22) angeordneten Werkstücks bestückbaren Werkzeugschlitten (23), eine in einer X-Achsrichtung (13) und in einer Y-Achsrichtung (14) bewegbare, mit einer Spannvorrichtung zur Aufnahme und zum Festspannen des zu bearbeitenden Werkstücks bestückbare Werkstückpositioniereinheit (25) und ein Maschinengestell (16) aufweist, wobei der Werkzeugschlitten (23) eine zu einer Rotationsbewegung antreibbare Antriebsspindel zur Bereitstellung von Antriebsenergie für das Bearbeitungswerkzeug (21) aufweist, und wobei die Spannvorrichtung um wenigstens eine erste Rotationsachse (26) rotierbar ist, und mit wenigstens einem Werkzeugmagazin (29), das ein Magazingestell (30) aufweist, an dem eine Werkzeugfördervorrichtung (31) angeordnet ist, wobei die Werkzeugfördervorrichtung (31) ein mittels eines Magazinantriebs (32) antreibbares Förderelement (33) aufweist, an dem mehrere Werkzeughalterungen (34) zur Halterung von Bearbeitungswerkzeugen (21) angeordnet sind, wobei die Werkzeughalterungen (34) mittels einer Förderbewegung des Förderelementes (33) in eine Werkzeug-Wechselposition bewegbar sind, in der ein Werkzeugwechsler (35) mit dem Werkzeugmagazin (29) zum Werkzeugwechsel interagiert, **dadurch gekennzeichnet, dass** das Maschinengestell (16) wenigstens einen Magazin-Bestückungsplatz (41) aufweist, an dem das zugeordnete Werkzeugmagazin (29) lösbar lagerbar oder gelagert ist und ferner eine zu dem Bearbeitungszentrum (11) gehörende Magazinwechselvorrichtung (42) vorgesehen ist, mittels der das Werkzeugmagazin (29) zwischen einer Bereitschaftsposition außerhalb des Magazin-Bestückungsplatzes (41) und einer Gebrauchsposition an dem Magazin-Bestückungsplatz (41) bewegbar ist, und wobei das am Magazin-Bestückungsplatz (41) befindliche Werkzeugmagazin (29) mittels eines Vertikalantriebs (69) zwischen einer Einfahrposition und der mittels einer in der Y-Achsrichtung (14) stattfindenden Absenkbewegung erreichbaren Gebrauchsposition bewegbar ist.

2. Bearbeitungszentrum nach Anspruch 1, **dadurch gekennzeichnet, dass** die Magazinwechselvorrichtung (42) wenigstens einen Magazinwagen (73) zur Aufnahme und zum Transport des Werkzeugmagazins (29) aufweist.

3. Bearbeitungszentrum nach Anspruch 1 oder 2, **dadurch gekennzeichnet, dass** das Magazingestell (16) einen die Werkzeugfördervorrichtung (31) umgebenden Grundrahmen (43) aufweist, der mehrere Rahmenstreben (44a-d) aufweist, von denen an zwei Rahmenstreben (44a, 44c) jeweils Führungselemente (53), insbesondere Führungsrollen, angeordnet sind, die beim Magazinwechsel mit dem Maschinengestell (16) interagieren.

4. Bearbeitungszentrum nach Anspruch 3, **dadurch gekennzeichnet, dass** der Magazin-Bestückungsplatz (41) zwei, insbesondere einander gegenüberliegende Führungsschienen (54) aufweist, an denen die Führungselemente (53) linear bewegbar führbar sind und beim Magazinwechsel durch einen mittels eines Wechselantriebs (50) der Magazinwechselvorrichtung (42) erzeugten insbesondere in X-Achsrichtung (13) ausgerichteten Bewegungshub zwischen der Bereitschaftsposition und dem Magazin-Bestückungsplatz (41) bewegbar sind.

5. Bearbeitungszentrum nach Anspruch 4, **dadurch gekennzeichnet, dass** der Wechselantrieb (58) als Linearantrieb, insbesondere fluidisch betätigbarer Hubzylinder, ausgebildet ist, wobei der Linearantrieb ein Antriebsglied, insbesondere Hubstange (59), aufweist, das mit einem Mitnehmerelement (63) derart koppelbar ist, dass im gekoppelten Zustand der Bewegungshub auf das Werkzeugmagazin (29) einleitbar ist, um dieses zwischen der Bereitschaftsposition und dem Magazin-Bestückungsplatz (41) zu bewegen.

6. Bearbeitungszentrum nach Anspruch 5, **dadurch gekennzeichnet, dass** der Linearantrieb am Maschinengestell (16) und das Mitnehmerelement (63) am Werkzeugmagazin (29) angeordnet sind.

7. Bearbeitungszentrum nach Anspruch 5 oder 6, **dadurch gekennzeichnet, dass** der Linearantrieb in Form des Hubzylinders um eine Schwenkachse schwenkbar, insbesondere am Maschinengestell (16) gelagert ist, wobei zur Kopplung mit dem Mitnehmerelement (63) ein Einschwenken der Hubstange (59) in eine am Mitnehmerelement (63) ausgebildeten Aufnahme (66) stattfindet.

8. Bearbeitungszentrum nach Anspruch einem der vorhergehenden Ansprüche, **dadurch gekennzeichnet, dass** der Vertikalantrieb (69) mehrere Antriebseinheiten (70) aufweist, von denen jeweils wenigstens einer mit einer der Führungsschienen (54) des Maschinengestells (18) derart gekoppelt ist, dass die Führungsschienen (54) per Vertikalhub auf- oder abwärts bewegbar sind.

9. Bearbeitungszentrum nach einem der Ansprüche 4 bis 8, **dadurch gekennzeichnet, dass** die den Führungsschienen jeweils zugeordneten Rahmenstreben (44a, 44c) des Magazingestells (16) jeweils wenigstens zwei sich in Y-Achsrichtung (14) erstreckende Durchgangslöcher (72) aufweisen, die in der Gebrauchsposition des Werkzeugmagazins (29) jeweils von einem am Maschinengestell (16) angeordneten Zentrierdorn (71) durchsetzt sind.

10. Bearbeitungszentrum nach einem der vorhergehenden Ansprüche, **dadurch gekennzeichnet, dass** Positionierhilfsmittel vorgesehen sind, mit denen eine Positionierung und Fixierung des Magazinwagens (73) an dem Maschinengestell (16) zur Einnahme der Bereitschaftsposition des Werkzeugmagazins (29) ermöglicht ist.

11. Bearbeitungszentrum nach Anspruch 10, **dadurch gekennzeichnet, dass** die Positionierhilfsmittel Positionierbolzen (80) und mit den Positionierbolzen (80) zusammenwirkende Andockklammern (81) mit jeweils einer Einfahröffnung (82) für die Positionierbolzen (80) aufweisen, wobei vorzugsweise die Andockklammern am Maschinengestell (16) und die Positionierbolzen (80) am Magazinwagen (73) angeordnet sind.

12. Bearbeitungszentrum nach einem der vorhergehenden Ansprüche, **dadurch gekennzeichnet dass** das Förderelement (33) als endlos umlaufendes Förderband, insbesondere Förderkette, ausgebildet ist, das mittels des Magazinantriebs (32) in der Gebrauchsposition des Werkzeugmagazins in Z-Achsrichtung (15) antreibbar ist.

13. Bearbeitungszentrum nach einem der vorhergehenden Ansprüche, **dadurch gekennzeichnet, dass** der Magazin-Bestückungsplatz (41) wenigstens drei Auflageelemente (83) aufweist, auf denen das Werkzeugmagazin (29) in der Arbeitsposition aufliegt.

14. Bearbeitungszentrum nach einem der vorhergehenden Ansprüche, **dadurch gekennzeichnet, dass** ein Positionsschalter (84) vorgesehen ist, der eingerichtet ist, bei Erreichen der Einfahrposition die Absenkbewegung des Werkzeugmagazins (29) auszulösen.
